# EUROPÄISCHE PATENTSCHRIFT

(11) **EP 3 123 976 B1**
(45) Veröffentlichungstag und Bekanntmachung des Hinweises auf die Patenterteilung: **08.01.2020**
(21) Anmeldenummer: 15179313.0
(22) Anmeldetag: 31.07.2015
(51) Int. Cl.: A61C 13/15

(54) **LICHTHÄRTGERÄT**
LIGHT CURING DEVICE
APPAREIL DE DURCISSEMENT À LA LUMIERE

(43) Veröffentlichungstag der Anmeldung: 01.02.2017
(73) Patentinhaber: Ivoclar Vivadent AG, 9494 Schaan (LI)
(72) Erfinder: Senn, Bruno, 9056 Gais (CH); Pauler, Markus, 6800 Feldkirch (AT)
(74) Vertreter: Baronetzky, Klaus

(56) Entgegenhaltungen:
- EP-A1- 2 332 491
- WO-A2-02/33312
- DE-A1- 10 125 341
- JP-A- 2004 267 437
- US-A1- 2001 046 652

## Beschreibung

Die Erfindung betrifft ein Lichthärtgerät, gemäß dem Oberbegriff von Anspruch 1.

Ein derartiges Lichthärtgerät ist aus der EP 2 332 490 bekannt. Bei einem derartigen Lichthärtgerät ist ein Substrat als Basis für die Aufnahme von LED-Chips vorgesehen. Dieses dient der Wärmeableitung, aber auch der Anbringung von elektrischen Verbindungen mit den LED-Chips.

Jeder Chip weist ein Reflektionselement auf, der sich in an sich bekannter Weise von dem Chip ausgehend in Richtung der Lichtabgabe erstreckt.

Die Chips erwärmen sich bei Lichtemission, die mit Wärmeemission einhergeht, und damit auch die Reflektorkörper. Über einen Dehnungsspalt zwischen den einzelnen Reflektionselementen der Reflektoren besteht die Möglichkeit, dass diese sich je symmetrisch ausdehnen.

Diese Lösung ist zwar im Grunde optisch gut, jedoch bedarf sie einer exakten Montage, um den im Submillimeter-Bereich vorgesehenen Spalt zwischen den Reflektoren tatsächlich zu realisieren. Zudem ist diese Lösung ausgesprochen komplex, wenn deutlich mehr als 3 LED-Chips vorgesehen sein sollen.

Es sind daher auch Reflektorkörper vorgeschlagen worden, die sich in Hexagonal-Anordnung zueinander erstrecken, um eine möglichst dichte Lichtemission zu erreichen; bei einem derartigen Lichthärtgerät wird zunächst die Anordnung der Chips montiert, und hieran anschließend wird in einem Zuge der Reflektorkörper aufgesetzt.

Auch hier muss jedoch dafür Sorge getragen werden, dass die Ausrichtung zwischen Reflektorkörper und den einzelnen LED-Chips in sich stimmt.

Es ist auch bereits vorgeschlagen worden, einzelne Einzelreflektoren in einem aus Metall bestehenden Substratkörper vorzusehen. Dies führt zwar dazu, dass sich nur unwesentliche Verformungen einstellen, die die Ausrichtung der optischen Achse der einzelnen Reflektoren praktisch nicht beeinflussen. Nachteilig ist jedoch der vergleichsweise hohe Aufwand und die geringe Flexibilität, denn für jedes Lichthärtgerät bzw. jede Art des Lichthärtgeräts muss ein spezieller Substratkörper aus dem Vollen gefertigt werden, wobei für die spanabhebende Bearbeitung typischerweise zwei unterschiedliche Arten von Werkzeugmaschinen eingesetzt werden müssen, nämlich eine Drehmaschine und eine Fräsmaschine. Dennoch ist die Qualität gedrehter Reflektoren vergleichsweise schlecht, auch wenn im Nachhinein eine entsprechende Überschutzschicht, beispielsweise durch Verchromen, hergestellt ist.

Von der Flexibilität her, aber auch von der Qualität der Reflexion und der optischen Ausrichtung sind daher demgegenüber Lösungen gemäß der EP 2 332 491 überlegen.

Weitere Lichthärtgeräte sind aus WO 02/33312, US 2001/0046652, DE 101 25 341 und JP 2004-267437 bekannt.

Demgegenüber liegt jedoch der Erfindung die Aufgabe zugrunde, ein Lichthärtgerät gemäß dem Oberbegriff von Anspruch 1 zu schaffen, das hinsichtlich der Flexibilität bei dennoch geringeren Fertigungskosten, aber mindestens gleichbleibender optischer Qualität weiter verbessert ist.

Diese Aufgabe wird erfindungsgemäß durch Anspruch 1 gelöst. Vorteilhafte Weiterbildungen ergeben sich aus den Unteransprüchen.

Die erfindungsgemäße Besonderheit ist mit den Verstärkungswänden oder einem Verstärkungsring verbunden, die einen gemeinsamen Reflektorkörper mit Reflektionselementen umgeben. Die Reflektionselemente selbst sind eng benachbart; sie können sich sogar schneiden. Durch die ringförmige, insbesondere kreisringsförmige Verstärkungswand wird gleichsam verhindert, dass sich die Reflektionselemente bei Erwärmung "auseinander bewegen" und sich ihre optischen Achsen nach außen verlagern. Die Verstärkungswand ist zum einen recht weit entfernt von der Wärmequelle LED-Chip, und zum anderen erstreckt sie sich frei schräg nach oben hin in den Raum hinein, so dass auch eine gewisse Kühlung dort gegeben ist. Die Spielschlitze gemäß der EP 2 332 491 lassen sich so ohne Qualitätseinbußen vermeiden, und die Fertigung ist deutlich kostengünstiger, da statt dreier Spritzgussteile lediglich ein Spritzgussteil gefertigt werden muss.

In vorteilhafter Ausgestaltung lassen sich zudem besonders günstig auch Sensoren in dem Reflektorkörper unterbringen, nämlich an den Außenecken der Trennwände bzw. zwischen diesen und der Verstärkungswand. Dort liegt - egal ob beispielsweise eine Dreier-Kleeblattform oder eine Vierer-Kleeblattform für die Anordnung der Reflektionselemente gewählt ist - stets ein ausreichender Freiraum vor, und die Sensoröffnungen, die zwischen der Verstärkungswand und dem Kleeblatt vorgesehen sind, ermöglichen zusätzlich das Durchtreten von Luft, was zur weiteren Kühlung der Verstärkungswand beiträgt.

Auch wenn hier eine Verstärkungswand als wesentliches Element angesprochen ist, versteht es sich, dass diese nicht bis zu der Höhe der LED-Chips gezogen werden muss; insofern könnte die Verstärkungswand auch als Verstärkungsring bezeichnet werden, der bevorzugt mit der oberen Ebene der Reflektoren abschließt.

Die ringförmige Ausgestaltung mit gegenüber den Trennwänden deutlich reduzierter Bauhöhe erlaubt auch eine weitere thermische Trennung von dem Substrat und den LED-Chips als Wärmequellen.

Der erfindungsgemäße Reflektorkörper lässt sich vergleichsweise preisgünstig fertigen und in an sich bekannter Weise nach Abschluss des Spritzgussverfahrens innen verspiegeln. Er ist auch flexibel, denn die vorgesehenen Ausnehmungen erlauben es bei einer preisgünstigen Version, beispielsweise lediglich zwei einander gegenüberliegende Reflektoren mit LED-Chips zu bestücken. Bei höherer Leistung kann ein dritter LED-Chip hinzugefügt werden, und bei weiter erhöhter Leistung ein vierter, beispielsweise mit einer anderen Emissionswellenlänge.

Erfindungsgemäß ist ein zentraler LED-Chip hinzugefügt , also im Zentrum des Kleeblatts, unterhalb einer entsprechenden Durchtrittsausnehmung. Dieser LED-Chip emittiert mit einem Emissionsmaximum, das von dem Emissionsmaximum der übrigen LED-Chips verschieden ist. In der maximalen Ausbaustufe sind dann Sensoren unterhalb der Einbuchtungen des Kleeblatts vorgesehen. Diese dienen dazu, von dem zu härtenden Dentalrestaurationsteil oder von anderen Gegenständen reflektierte Strahlung zu erfassen, um die Steuerung des Lichthärtgeräts insgesamt günstig zu beeinflussen.

Bei einem vierblättrigen Kleeblatt lassen sich daher beispielsweise drei LED-Chips unterbringen, die mit großer Leistung und einem Emissionsmaximum emittieren, das im blauen Lichtbereich liegt, ein weiterer LED-Chip im vierten Blatt des Kleeblatts, der ebenfalls mit großer Leistung mit einem violetten Emissionsmaximum emittiert, und ein fünfter LED-Chip in der zentralen Öffnung, der in einem grünem Emissionsmaximum mit geringerer Leistung emittiert.

Insofern stellt die erfindungsgemäße Lösung mit dem besonderen Reflektorkörper einen flexiblen und für unterschiedliche Lichthärtgeräte geeigneten und preisgünstigen Reflektorkörper dar.

In weiterer vorteilhafter Ausgestaltung ist es vorgesehen, dass Sammellinsen in jedem Reflektor oder mindestens einem der Reflektoren vorgesehen sind, die die LED-Chips je abdecken. Die Sammellinsen können so realisiert sein, dass sie zusammen mit den zugehörigen LED-Chips bereits auf der Printplatte montiert sind und auf dieser Printplatte ebenfalls großflächig den LED-Chip umgebend aufliegen. Die Sammellinse wird dann vergleichsweise heiß, auch wenn sie aus Kunststoff besteht. In diesem Zusammenhang ist es dann günstig, wenn die Sammellinse durch einen Spalt von dem zugehörigen Reflektor getrennt ist, was weiter dazu beiträgt, dass der Reflektor sich nur wenig verformt,

Weitere Vorteile, Einzelheiten und Merkmale ergeben sich aus der nachfolgenden Beschreibung eines Ausführungsbeispiels der Erfindung anhand der Zeichnungen. Es zeigen:
- Fig. 1: eine schematische Ansicht eines erfindungsgemäßen Lichthärtgeräts in einem Detail, nämlich dem erfindungsgemäßen Reflektorkörper;
- Fig. 2: den Reflektorkörper in der Ausfürungsform gemäß Fig. 1, jedoch in der Draufsicht;
- Fig. 3: ein weiteres Detail eines erfindungsgemäßen Lichthärtgeräts, nämlich den Lichtleitstab in Kombination mit den Lichtquellen, dem Reflektorkörper und auch in der Anwendung an einem Dentalrestaurationsteil;
- Fig. 4: den erfindungsgemäßen Reflektorkörper, montiert auf einer Printplatte;
- Fig. 5: ein Detail des Reflektorkörpers und der Printplatte.

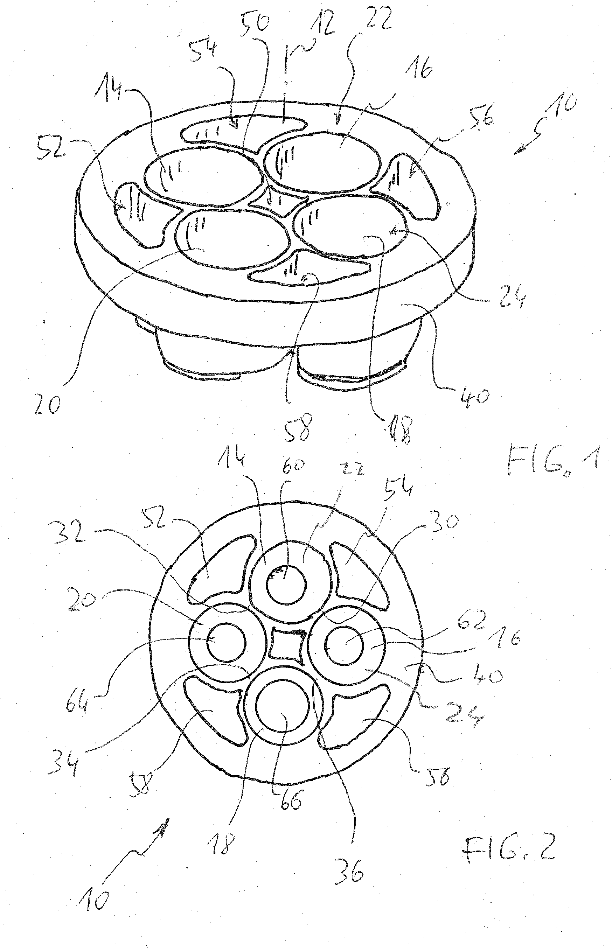

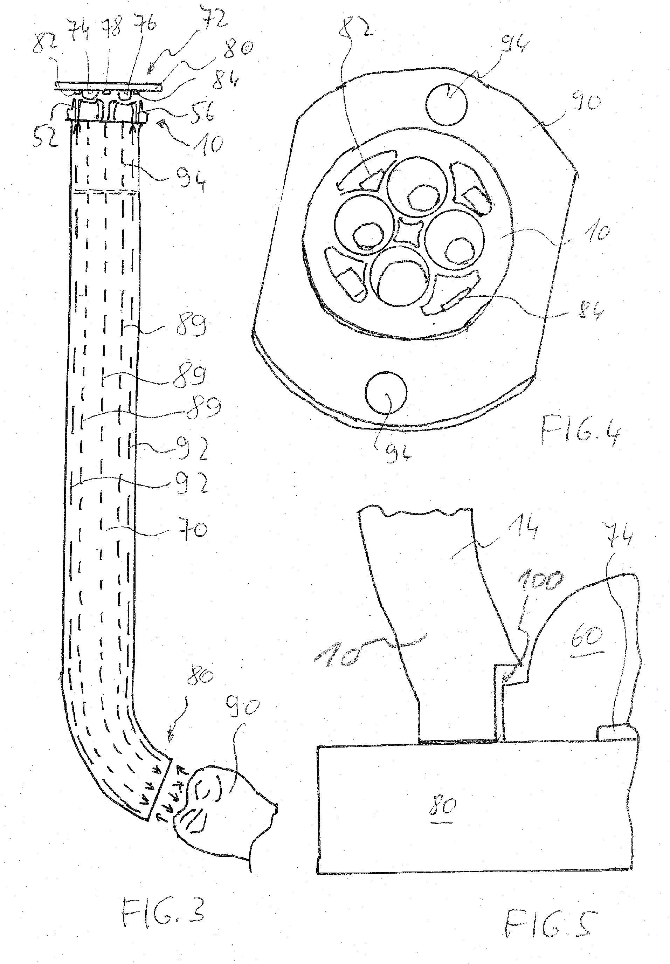

Der in Fig. 1 dargestellte Reflektorkörper 10 ist Teil eines im Übrigen nicht dargestellten Lichthärtgeräts. Der Reflektorkörper 10 ist vorzugsweise aus schwarzem Kunststoff und an seiner Innenseite an den Reflektionselementen mit einer HR-Schicht mit hohem Refiexionswirkungsgrad versehen. Die HR-Schicht ist auf die emittierte Wellenlänge abgestimmt. Der Reflektorkörper 10 befindet sich an der Schnittstelle zwischen Lichtquellen und einem Lichtleitstab, wie es besser aus Fig. 3 ersichtlich ist, in dem Handstück des Lichthärtgeräts.

In anderer Ausgestaltung befindet er sich an der Spitze eines Stabs, der dafür bestimmt ist, in den Mund eines Patienten eingeführt zu werden und dort Lichtstrahlung zum Härten von Dentalrestaurationen abzugeben, vor den entsprechenden Lichtquellen, die an der Spitze des Stabs montiert sind.

Der Reflektorkörper 10 ist im Grunde, also von der Außenform her, kreisförmig, und erstreckt sich insofern um eine Zentralachse 12. Er weist eine Mehrzahl von Reflektionselementen auf, von denen im Beispielsfalle vier Reflektionselemente 14 bis 20 vorgesehen sind. Diese erstrecken sich nach der Art eines vierblättrigen Kleeblatts und enden bündig an einer Vorderfläche 22. Zusammen mit zugehörigen, aus Fig. 1 nicht ersichtlichen Sammellinsen bildet jedes Reflektionselement 14 bis 20 einen Reflektor, der hier beispielhaft als Reflektor 24 bezeichnet sei.

Die Reflektionselemente 14 bis 20 und damit die zugehörigen Reflektoren 20, 22, 24 sind in der Stirnansicht gleichmäßig verteilt ausgebildet, wozu auch auf Fig. 2 zu verweisen ist, die die Stirnansicht des Reflektorkörpers 10 zeigt.

Die Reflektoren und die zugehörigen Reflektionselemente grenzen grundsätzlich aneinander an, sind jedoch über Trennwände 30, 32, 34 und 36 je voneinander getrennt. Dies bedeutet, dass die Kegel einander nicht schneiden, aber eng benachbart sind. Insbesondere beträgt der Abstand deutlich weniger als der Durchmesser jedes Kegels an der Vorderfläche 22.

Erfindungsgemäß sind sämtliche Reflektoren und Reflektionselemente Teil des gemeinsamen Reflektorkörpers. Dieser ist mit einem Verstärkungsring 40 umgeben, der auch als Verstärkungswand betrachtet werden könnte. Der Verstärkungsring 40 verläuft kreisringförmig um alle Reflektionselemente 14 bis 20 herum und grenzt insofern außen an diese an.

Die Stärke des Verstärkungsrings in radialer Richtung betrachtet beträgt deutlich mehr als die Stärke der Trennwände 30 bis 36, beispielsweise das Fünffache. Sie beträgt auch zwischen 50% und 100% des Radius eines Reflektionselements und stellt daher einen massiven Ring dar, der auch bei Verformung des "Innenlebens" des Reflektors diesen außen stabil hält.

Aufgrund dieser Konfiguration ist es erfindungsgemäß möglich, mit einem einstückigen Reflektor zu der nahezu gleichen Ausschaltung der Parallaxenfehler zu kommen wie beim vorstehend erwähnten Stand der Technik.

Der Verstärkungsring 40 steift dementsprechend die dünnwandige Reflektionselementanordnung derart aus, dass die optischen Achsen der Reflektionselemente auch bei Erwärmung der Reflektionselemente nicht voneinander divergieren.

In der in Fig. 1 dargestellten Ausführungsform ist eine zentrale Durchbrechung 50 vorgesehen, die sich in der "Mitte" des Kleeblatts um die Zentralachse 12 herum erstreckt. Diese Durchbrechung dient dem Lichtdurchlass eines zentralen LED-Chips, der ein Emissionsmaximum im grünen Wellenlängenbereich haben kann.

Der Nebenwellenlängenbereich kann gezielt und günstigerweise grün sein und für die Erfassung der Position des Lichthärtgeräts in Abhängigkeit von dem Reflexionsergebnis auf einer Oberfläche einer Dentalrestauration verwendet werden.

Um die reflektierte Strahlung zu erfassen, sind Sensoren vorgesehen, die aus Fig. 4 ersichtlich sind. Durchbrechungen 52, 54, 56 und 58 sind entlang des Außenumfangs des Reflektorkörpers 10, jedoch innerhalb des Verstärkungsrings 40 vorgesehen, um Licht zu den Sensoren durchzulassen. Die Durchbrechnungen 52 bis 58 weisen die aus Fig. 1 und 2 ersichtliche besondere Form auf, die sich an den Außenumfang der Reflektionselemente einerseits und an den Innenumfang des Verstärkungsrings 40 andererseits anlehnt.

In einer modifizierten Ausführungsform fehlt der Verstärkungsring 40 im Bereich der Durchbrechungen 52 bis 58, so dass mehrere Verstärkungswände 40 an den Reflektionselementen 14 bis 20 vorliegen und anstelle der Durchbrechungen Einbuchtungen mit im Übrigen gleicher Form vorgesehen sind.

Aus Fig. 2 ist ersichtlich, dass Sammellinsen 60, 62 und 64 vor drei LED-Chips in den zugehörigen Reflektionselementen 14, 16 und 20 angeordnet sein können, die recht kompakt sind, und sich vor LED-Chips erstrecken, die im Hauptwellenlängenbereich mit blauem Emissionsmaximum emittieren.

Der vierte LED-Chip emittiert in einem Wellenlängenbereich mit einem Emissionsmaximum, das im violetten Wellenlängenbereich liegt und ist von einer Sammellinse 66 abgedeckt.

Aus Fig. 3 ist ersichtlich, in welcher Weise sich ein Lichtleitstab 70 vor der Lichtquelle 72, die unter anderem LED-Chips 74 und 76 aufweist, erstreckt.

Die Lichtquelle 72 umfasst auch den zentralen LED-Chip 78, der sich in der Mitte der Kleeblattanordnung erstreckt.

Die LED-Chips sind auf einer durchkontaktierten Printplatte 80 angeordnet. Die Printplatte 80 hat einen hohen Kupferanteil und dicke Durchkontaktierungen, so dass die Wärme gut zu einem nicht dargestellten Kühlkörper ableitbar ist.

Am Außenumfang des Bereichs der Lichtquelle 72 sind Sensoren angeordnet, von denen zwei Sensoren 82 und 84 aus Fig. 3 ersichtlich sind. Die Sensoren erstrecken sich hinter den Durchbrechungen 52 und 56.

Wie in Fig. 3 gestrichelt dargestellt ist, emittieren die LED-Chips 74 bis 78 Sendelicht 89 zum distalen Ende 88 des Lichtleitstabs 70. Dort verlässt das emittierte Licht den Lichtleitstab 70 und trifft auf ein Dentalrestaurationsteil 90. Dort wird es mindestens teilweise reflektiert. Als Empfangslicht 92 tritt es erneut in den Lichtleitstab ein und durch die Durchbrechungen 52 und 56 fällt es auf die Sensoren 82 und 84, über welche eine Auswertung stattfindet.

Bei Bedarf kann ein Lichtmischkörper 94 integriert in dem Lichtleitstab 70 vorgesehen sein, der dem Reflektorkörper 10 benachbart angeordnet ist.

Fig. 4 zeigt eine perspektivische Ansicht der Printplatte 80 mit aufmontierten LED-Chips, Sensoren 82 und 84 sowie dem Reflektorkörper 10. Über Befestigungslöcher 94 ist die Printplatte 70 sicher an dem Lichthärtgerät 80 befestigt.

Der Lichtleitstab 70 ist bevorzugt lösbar in dem Lichhärtgerät im Übrigen gelagert. Dies geschieht über an sich bekannte, jedoch hier nicht dargestellte klemmende Befestigungsmittel, so dass der Lichtleitstab einschließlich des Lichtmischkörpers entfernbar und bei Bedarf autoklavierbar ist.

In Fig. 5 ist ein Teil eines Reflektionselements 14 dargestellt, in Kombination mit der zugehörigen Sammellinse 60 und den zugehörigen LED-Chips 74. Es ist ersichtlich, dass der Reflektorkörper 10 den Außenumfang der Sammellinse 60 überragt. Es ist jedoch gezielt ein Spalt 100 zwischen dem Reflektorkörper 14 und der Sammellinse 60 vorgesehen, der eine thermische Isolierung insofern bietet. Die um Chip 74 abgegebene Wärme wird daher ganz überwiegend über die Printplatte 80 abgeleitet.

## Patentansprüche

1. Lichthärtgerät (80), mit
einer Mehrzahl von einzelnen, je einem Reflektor (24) zugeordneten LED-Chips (74, 76), wobei die LED-Chips (74, 76) je im gleichen Abstand um eine gemeinsame Zentralachse (12) angeordnet und insbesondere je getrennt ansteuerbar sind, und
Reflektionselementen (14, 16, 18, 20) der Reflektoren (24), die benachbart zueinander angeordnet sind, wobei
der Abstand der Reflektionselemente (14, 16, 18, 20) voneinander je weniger als ein Fünftel ihres Durchmessers beträgt,
die Reflektionselemente (14, 16, 18, 20) in Kleeblattanordnung um die gemeinsame Zentralachse (12) angeordnet und Teil eines gemeinsamen Reflektorkörpers (10) sind,
der Reflektorkörper eine kreisförmige Außenform aufweist, die sich um die gemeinsame Zentralachse erstreckt, und die Reflektionselemente (14, 16, 18, 20) über Trennwände (30, 32, 34, 36) voneinander trennt, und
der Reflektorkörper (10) außen an den Reflektionselementen (14, 16, 18, 20) Verstärkungswände (40) aufweist, die - bezogen auf jedes der Reflektionselemente (14, 16, 18, 20) - der Zentralachse (12) gegenüberliegen,
**dadurch gekennzeichnet, dass**
der Reflektorkörper (10) eine zentrale Durchbrechung (50) aufweist, unter der ein LED-Chip (78) angeordnet ist, der mit einem Emissionsmaximum emittiert, das von einem Emissionsmaximum der übrigen LED-Chips verschieden ist.

2. Lichthärtgerät nach Anspruch 1, **dadurch gekennzeichnet, dass** der Reflektorkörper (10) gegenüber einer Ebene der LED-Chips (74, 76, 78) und von Sensoren (82, 84) erhaben und einstückig aufgebaut ist.

3. Lichthärtgerät nach Anspruch 2, **dadurch gekennzeichnet, dass** die Einbuchtungen oder Durchbrechungen (52, 54, 56, 58) in der Draufsicht auf den Reflektorkörper (10) aus Sicht der Zentralachse (12) betrachtet die Trennwände (30, 32, 34, 36) nach außen begrenzen, wobei die Trennwände (30, 32, 34, 36) und die Einbuchtungen oder Durchbrechungen (52, 54, 56, 58) punktsymmetrisch zur Zentralachse (12) angeordnet sind.

4. Lichthärtgerät nach einem der vorhergehenden Ansprüche, **dadurch gekennzeichnet, dass** der Reflektorkörper (10) im Bereich der Zentralachse (12) eine sternförmige Durchbrechung (50) aufweist, wobei sich die Trennwände (30 - 36) von der sternförmigen Durchbrechung (50) strahlenförmig wegerstrecken.

5. Lichthärtgerät nach einem de vorhergehenden Ansprüche, **dadurch gekennzeichnet, dass** der Reflektorkörper (10) auf einer Printplatte (80) über eine begrenzte Anzahl, insbesondere drei, Befestigungselemente gelagert ist, die insbesondere die Printplatte (80) mindestens teilweise durchdringen.

6. Lichthärtgerät nach einem der vorhergehenden Ansprüche, **dadurch gekennzeichnet, dass** jeder LED-Chip ( 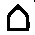 74, 76, 78) von einer Sammellinse abgedeckt ist, die sich den Chip umgebend auf einer Printplatte (80) erstreckt und auf dieser abgestützt ist.

7. Lichthärtgerät nach Anspruch 6, **dadurch gekennzeichnet, dass** jede Sammellinse (60, 62, 64, 66) zugleich auch mindestens eine Führungsfläche für das Reflektionselement ( 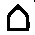 14, 16, 18, 20) des Reflektorkörpers (10) in dem zugehörigen Reflektor (24) bildet.

8. Lichthärtgerät nach Anspruch 6 oder 7, **dadurch gekennzeichnet, dass** die Sammellinsen (60, 62, 64), die sich vor LED-Chips (74, 76, 78) erstrecken, die in einem Hauptwellenlängenbereich mit blauem Emissionsmaximum emittieren, einen geringeren Durchmesser aufweisen als die Sammellinse (66), die sich vor einem LED-Chip (74, 76, 78) erstreckt, der in einem Wellenlängenbereich mit einem Emissionsmaximum emittiert, das im violetten Wellenlängenbereich liegt.

9. Lichthärtgerät nach einem der vorhergehenden Ansprüche, **dadurch gekennzeichnet, dass** drei LED-Chips ( 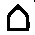 74, 76, 78) zueinander in einem gleichseitigen Dreieck angeordnet sind, wobei einer der LED-Chips (74, 76, 78) in einem Wellenlängenbereich mit einem Emissionsmaximum emittiert, das im violetten Wellenlängenbereich liegt und die beiden anderen LED-Chips (74, 76, 78) in einem Hauptwellenlängenbereich mit blauem Emissionsmaximum, insbesondere etwa 470nm, emittieren.

10. Lichthärtgerät nach einem der vorhergehenden Ansprüche, **dadurch gekennzeichnet, dass** eine Verstärkungswand (40) einen Stützvorsprung aufweist, der sich von der Verstärkungswand (40) nach außen erstreckt, sich parallel zur Zentralachse (12) erstreckt und auf der Printplatte (80) abstützt.

11. Lichthärtgerät nach einem der Ansprüche 6 bis 10, **dadurch gekennzeichnet, dass** jede Sammellinse (60, 62, 64, 66) durch einen Spalt von dem zugehörigen Reflektor (24) getrennt ist.

12. Lichthärtgerät nach einem der Ansprüche 4 bis 11, **dadurch gekennzeichnet, dass** der Reflektorkörper (10) im Bereich der Zentralachse (12) die sternförmige Durchbrechung (50) aufweist, unter der ein LED-Chip (78) mit einem Emissionsspektrum im grünen Wellenlängenbereich, angeordnet ist.

13. Lichthärtgerät nach einem der Ansprüche 1 bis 8, **dadurch gekennzeichnet, dass** die LED-Chips (74, 76, 78) unter den Reflektionselementen (14, 16, 18, 20) angeordnet sind, wobei diese Licht in einem Wellenlängenbereich emittieren, der sich von blau bis hellblau erstreckt, wobei drei LED-Chips (74, 76, 78) mit einem Emissionsmaximum bei 470nm und ein LED-Chip mit einem Emissionsmaximum von 410nm vorgesehen sind.

14. Lichthärtgerät gemäß einem der vorhergehenden Ansprüche, **dadurch gekennzeichnet, dass** Reflektorwände zu den Durchbrechungen (52, 54, 56, 58) für die Sensoren (82, 84) hin mit einer gleichförmigen Wandstärke, insbesondere zwischen einem Zwanzigstel und einem Sechstel des Reflektordurchmessers an dessen oberem Ende, ausgestattet sind.

15. Lichthärtgerät nach Anspruch 14, **dadurch gekennzeichnet, dass** der Reflektorkörper (10) eine Außenwand aufweist, die im Wesentlichen zylindrisch ausgebildet ist, und deren Wandstärke größer als eine Wandstärke der Reflektorwände ist, die die Reflektionselemente (14, 16, 18, 20) mindestens teilweise umgeben.

16. Lichthärtgerät nach einem der vorhergehenden Ansprüche, **dadurch gekennzeichnet, dass** der Reflektorkörper (10) eine plane Oberfläche aufweist und an einer Unterseite mit einem Lichtleitstab (70) direkt oder über ein optisches Koppelelement verbunden ist.

## Claims

1. A light curing device (80), comprising
a plurality of individual LED chips (74, 76) each of which being assigned to a reflector (24), wherein the respective LED chips (74, 76) are arranged at the same distance around a common central axis (12) and especially are separately actuatable, and
reflection elements (14, 16, 18, 20) of the reflectors (24), which are arranged adjacent to each other, wherein
the distance from one another between the reflection elements (14, 16, 18, 20) is less than one fifth of their diameter,
the reflection elements (14, 16, 18, 20) are arranged in cloverleaf arrangement around the common central axis (12), forming part of a common reflector body (10),
the reflector body has a circular external shape which extends around the common central axis and separates the reflection elements (14, 16, 18, 20) from each another by way of partition walls (30, 32, 34, 36), and
the reflector body (10) has reinforcement walls (40) on the outside of the reflection elements (14, 16, 18, 20), which reinforcement walls (40) - in relation to each of the reflection elements (14, 16, 18, 20) - are located opposite the central axis (12), **characterized in that**
the reflector body (10) has a central perforation (50) having an LED chip (78) arranged below, which emits at an emission maximum different from an emission maximum of the remaining LED chips.

2. The light curing device according to claim 1, **characterized In that** the reflector body (10) Is raised from a plane of the LED chips (74, 76, 78) and sensors (82, 84) and is formed in a one-piece design.

3. The light curing device according to claim 2, **characterized in that** the indentations or perforations (52, 54, 56, 58), as seen in a top view from the central axis to the reflector body (10) (12), outwardly delimit the partition walls (30, 32, 34, 36), the partition walls (30, 32, 34, 36) and the indentations or perforations (52, 54, 56, 58) being arranged point-symmetrically with respect to the central axis (12).

4. The light-curing device according to one of the preceding claims, **characterized In that** the reflector body (10) has a star-shaped perforation (50) in the region of the central axis (12), the partition walls (30 - 36) radially extending away from the star-shaped perforation (50).

5. The light-curing device according to one of the preceding claims, **characterized in that** the reflector body (10) is mounted on a printed circuit board (80) via a limited number of fastening elements, especially three, which at least penetrate especially the printed circuit board (80).

6. The Light curing device according to one of the preceding claims, **characterized in that** each LED chip (74, 76, 78) Is covered by a collecting lens, which extends around the chip on a printed circuit board (80) and is supported thereon.

7. The light curing device according to claim 6, **characterized in that** in addition each collecting lens (60, 62, 64, 66) simultaneously forms at least one guide surface for the reflection element (14, 16, 18, 20) of the reflector body (10) in the associated reflector (24).

8. The light curing device according to claim 6 or 7, **characterized In that** the converging lenses (60, 62, 64) extending in front of LED chips (74, 76, 78) emitting light of a main wavelength region having blue emission maximum have a smaller diameter than the converging lens (66) extending in front of an LED chip (74, 76, 78) emitting light of a wavelength region having emission maximum located in the violet wavelength region.

9. The light curing device according to one of the preceding claims, **characterized in that** three LED chips (74, 76, 78) are arranged in an equilateral triangle to each other, one of sald LED chips (74, 76, 78) emitting light of a wavelength region having an emission maximum located in the violet wavelength region and the other two LED chips (74, 76, 78) emitting light of a main wavelength region having a blue emission maximum, especially about 470nm.

10. The light curing device according to one of the preceding claims, **characterized In that** a reinforcing wall (40) comprises a supporting projection extending outwardly from the reinforcing wall (40), extending parallel to the central axis (12) and bearing against the printed circuit board (80).

11. The light-curing device according to one of claims 6 to 10, **characterized in that** each collecting lens (60, 62, 64, 66) is separated from the associated reflector (24) by a gap.

12. The light-curing device according to one of claims 4 to 11, **characterized In that** the reflector body (10) has the star-shaped perforation (50) in the region of the central axis (12), under which perforation an LED chip (78) having an emission spectrum In the green wavelength range is arranged.

13. The light curing device according to one of claims 1 to 8, **characterized in that** the LED chips (74, 76, 78) are arranged below the reflection elements (14, 16, 18, 20), the LED chips emitting light In a wavelength range extending from blue to light blue, wherein three LED chips (74, 76, 78) having emission maximum at 470nm and one LED chip having emission maximum of 410nm are provided.

14. The light curing device according to one of the preceding claims, **characterized in that** for the sensors (82, 84) reflector walls facing the perforations (52, 54, 56, 58) having a uniform wall thickness, especially between a twentieth and a sixth of the reflector diameter at the upper end thereof, are provided.

15. The light-curing device according to claim 14, **characterized in that** the reflector body (10) has an outer wall which is essentially cylindrical and the wall thickness of which is greater than a wall thickness of the reflector walls which at least partially surround the reflection elements (14, 16, 18, 20).

16. The light-curing device according to one of the preceding claims, **characterized in that** the reflector body (10) has a planar surface and, on a lower side, Is connected to a light guide rod (70) directly or via an optical coupling element.

## Revendications

1. Dispositif de photopolymérisation (80), avec
une pluralité de puces LED individuels, dont chacun est associée à un réflecteur (24), où les puces LED (74, 76) sont disposées chacune à la même distance autour d'un axe central commun (12) et en particulier peuvent être commandées séparément, et
des éléments de réflexion (14, 16, 18, 20) des réflecteurs (24), qui sont disposés les uns à côté des autres, où
la distance entre chaque élément de réflexion (14, 16, 18, 20) est inférieure à un cinquième de leur diamètre respectif,
les éléments de réflexion (14, 16, 18, 20) sont disposés en forme de trèfle autour de l'axe central commun (12) et font partie d'un corps réflecteur commun (10),
le corps réflecteur présente une forme extérieure circulaire qui s'étend autour de l'axe central commun, et sépare les éléments de réflexion (14, 16, 18, 20) les uns des autres par des cloisons de séparation (30, 32, 34, 36), et
le corps réflecteur (10) présente des cloisons de renforcement (40) à l'extérieur sur les éléments de réflexion (14, 16, 18, 20) qui se trouvent en face de l'axe central (12) par rapport à chacun des éléments réfléchissants (14, 16, 18, 20),
**caractérisé en ce que**
le corps réflecteur (10) présente une ouverture centrale (50) sous laquelle est disposée une puce LED (78) qui émet à un maximum d'émission qui est différent d'un maximum d'émission des autres puces LED.

2. Dispositif de photopolymérisation selon la revendication 1, **caractérisé en ce que** le corps réflecteur (10) est relevé par rapport à un plan des puces LED (74, 76, 78) et des capteurs (82, 84) et est réalisé en une seule pièce.

3. Dispositif de photopolymérisation selon la revendication 2, **caractérisé en ce que** les concavités ou ouvertures (52, 54, 56, 58) délimitent les cloisons de séparation (30, 32, 34, 36) vers l'extérieur, vues de dessus sur le corps réflecteur (10) du point de vue de l'axe central (12), où les cloisons de séparation (30, 32, 34, 36) et les concavités ou ouvertures (52, 54, 56, 58) sont disposées à symétrie ponctuelle par rapport à l'axe central (12).

4. Dispositif de photopolymérisation selon l'une des revendications précédentes, **caractérisé en ce que** le corps réflecteur (10) présente une ouverture (50) en forme d'étoile dans la zone de l'axe central (12), où les cloisons de séparation (30-36) s'étendent radlalement à partir de l'ouverture (50) en forme d'étoile (50).

5. Dispositif de photopolymérisation selon l'une des revendications précédentes, **caractérisé en ce que** le corps réflecteur (10) est monté sur un circuit Imprimé (80) par un nombre limité, en particulier trois, d'éléments de fixation qui pénètrent en particulier au moins partiellement le circuit imprimé (80).

6. Dispositif de photopolymérisation selon l'une des revendications précédentes, **caractérisé en ce que** chaque puce LED (74, 76, 78) est recouverte d'une lentille collectrice qui s'étend autour de la puce sur un circuit imprimé (80) et est supportée sur celui-ci.

7. Dispositif de photopolymérisation selon la revendication 6, **caractérisé en ce que** chaque lentille collectrice (60, 62, 64, 66) forme simultanément au moins une surface de guidage pour l'élément de friction (14, 16, 18, 20) du corps réflecteur (10) dans le réflecteur (24) associé.

8. Dispositif de photopolymérisation selon la revendication 6 ou 7, **caractérisé en ce que** les lentilles collectrices (60, 62, 64) qui s'étendent devant des puces LED (74, 76, 78) qui émettent dans une plage de longueur d'onde principale avec un maximum d'émission bleu présentent un plus diamètre plus petit que la lentille convergente (66) qui s'étend devant une puce LED (74, 76, 78) qui émet dans une plage de longueur d'onde ayant un maximum d'émission situé dans la région de longueur d'onde violette.

9. Dispositif de photopolymérisation selon l'une des revendications précédentes, **caractérisé en ce que** trois puces LED (74, 76, 78) sont disposées en triangle équilatéral l'une par rapport à l'autre, où l'une des puces LED (74, 76, 78) émet dans une plage de longueurs d'onde ayant un maximum d'émission située dans la plage dé longueurs d'onde violette et les deux autres puces LED (74, 76, 78) émettent dans une plage de longueurs d'onde principale avec un maximum d'émission bleu en particulier environ 470nm.

10. Dispositif de photopolymérisation selon l'une des revendications précédentes, **caractérisé en ce qu'**un cloison de renforcement (40) présente une saillie de support qui s'étend vers l'extérieur depuis le cloison de renforcement (40), s'étend parallèlement à l'axe central (12) et est supportée sur le circuit Imprimé (80).

11. Dispositif de photopolymérisation selon l'une des revendications 6 à 10, **caractérisé en ce que** chaque lentille collectrice. (60, 62, 64, 66) est séparée par un écart du réflecteur associé (24).

12. Dispositif de photopolymérisation selon l'une des revendications 4 à 11, **caractérisé en ce que** dans la zone de l'axe central (12), le corps réflecteur (10) présente l'ouverture en étoile (50) sous laquelle est disposée une puce LED (78) ayant un spectre d'émission dans la plage des longueurs d'onde vertes.

13. Dispositif de photopolymérisation selon l'une quelconque des revendications 1 à 8, **caractérisé en ce que** les puces LED (74, 76, 78) sont disposées sous les éléments de réflexion (14, 16, 18, 20), où celles-ci émettent de la lumière dans une gamme de longueurs d'onde allant du bleu au bleu clair, où trois puces LED (74, 76, 78) ayant un maximum d'émission à 470 nm et une puce LED ayant un maximum d'émission à 410nm sont prévues.

14. Dispositif de photopolymérisation selon l'une des revendications précédentes, **caractérisé en ce que** des cloisons de réflexion, ayant une épaisseur de cloison uniforme, en particulier entre un vingtième et un sixième du diamètre du réflecteur à son extrémité supérieure, sont pourvus vers les ouvertures (52, 54, 56, 58) pour les capteurs (82,84).

15. Dispositif de photopolymérisation selon la revendication 14, **caractérisé en ce que** le corps réflecteur (10) présente un cloison extérieur, essentiellement cylindrique, et dont l'épaisseur de cloison est supérieur à une épaisseur de cloison du cloison du réflecteur, qui entoure au moins partiellement les éléments de réflexion (14, 16, 18, 20).

16. Dispositif de traitement de la lumière selon l'une des revendications précédentes, **caractérisé en ce que** le corps réflecteur (10) présente une surface plane et est relié sur une face inférieure avec une tige de guidage de lumière (70) directement ou par un élément de couplage optique.
